# EUROPÄISCHE PATENTANMELDUNG

(11) **EP 0 754 733 A1**
(43) Veröffentlichungstag der Anmeldung: **22.01.1997**
(21) Anmeldenummer: 96810456.2
(22) Anmeldetag: 12.07.1996
(51) Int. Cl.: C09B 31/06, C09B 31/065, C09B 43/28, C09B 43/24, C09B 43/20, C09B 43/18

(54) **Azofarbstoffe, Verfahren zu deren Herstellung und deren Verwendung**

(30) Priorität: 21.07.1995 CH 2158/95
(71) Anmelder: Ciba SC Holding AG, 4057 Basel (CH)
(72) Erfinder: Adam, Jean-Marie, Dr., 68300 Rosenau (FR); Sutter, Peter, 4132 Muttenz (CH)

(57) **Zusammenfassung**

Azofarbstoffe der Formel 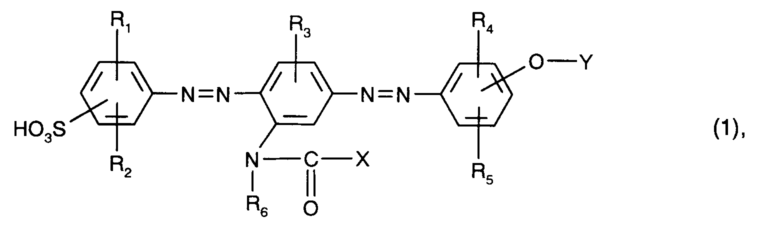
worin
R₁, R₂, R₃, R₄ und R₅ unabhängig voneinander Wasserstoff, C₁-C₄-Alkyl, C₁-C₄-Alkoxy oder Halogen sind,
R₆ Wasserstoff oder C₁-C₄-Alkyl,
X -C₁-C₄-Alkylen-O-C₁-C₄-Alkyl und
Y Wasserstoff; gegebenenfalls durch Hydroxy oder C₁-C₄-Alkoxy substituiertes C₁-C₈-Alkyl, C₂-C₄-Alkanoyl oder C₁-C₄-Alkoxycarbonyl; ein Rest der Formel -CH₂-CH=CH₂; C₁-C₄-Alkylsulfonyl; oder gegebenenfalls durch C₁-C₄-Alkyl, C₁-C₄-Alkoxy oder Halogen substituiertes Phenylsulfonyl ist, ergeben auf stickstoffhaltigen oder hydroxylgruppenhaltigen Fasermaterialien Färbungen von guten Echtheiten.

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel 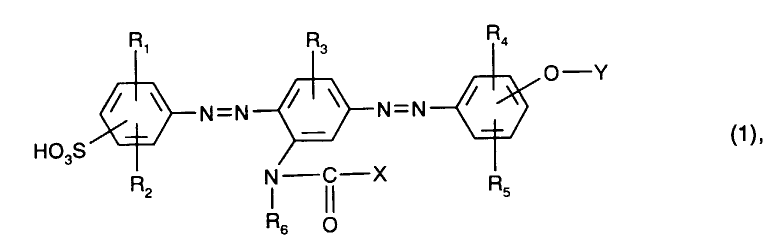 worin
R₁, R₂, R₃, R₄ und R₅ unabhängig voneinander Wasserstoff, C₁-C₄-Alkyl, C₁-C₄-Alkoxy oder Halogen sind,
R₆ Wasserstoff oder C₁-C₄-Alkyl,
X -C₁-C₄-Alkylen-O-C₁-C₄-Alkyl und
Y Wasserstoff; gegebenenfalls durch Hydroxy oder C₁-C₄-Alkoxy substituiertes C₁-C₈-Alkyl, C₂-C₄-Alkanoyl oder C₁-C₄-Alkoxycarbonyl; ein Rest der Formel -CH₂-CH=CH₂; C₁-C₄-Alkylsulfonyl; oder gegebenenfalls durch C₁-C₄-Alkyl, C₁-C₄-Alkoxy oder Halogen substituiertes Phenylsulfonyl ist.

Als C₁-C₄-Alkyl kommen für R₁, R₂, R₃, R₄, R₅ und R₆ unabhängig voneinander z.B. Methyl, Äthyl, Propyl, Isopropyl, Butyl, sek.-Butyl, tert.-Butyl oder Isobutyl, insbesondere Methyl, in Betracht.

Als C₁-C₄-Alkoxy kommen für R₁, R₂, R₃, R₄ und R₅ unabhängig voneinander z.B. Methoxy, Äthoxy, Propoxy, lsopropoxy, Butoxy oder lsobutoxy, insbesondere Aethoxy oder vorzugsweise Methoxy, in Betracht.

Als Halogen kommen für R₁, R₂, R₃, R₄ und R₅ unabhängig voneinander z.B. Fluor, Brom oder insbesondere Chlor in Betracht.

Der Rest Y als C₁-C₈-Alkyl kann geradkettig oder verzweigt sein. Als Beispiele seien Methyl, Äthyl, Propyl, Isopropyl, Butyl, sek.-Butyl, tert.-Butyl, Isobutyl, sowie geradkettiges oder verzweigtes Pentyl, Hexyl, Heptyl oder Octyl genannt. Bevorzugt handelt es sich bei dem Rest Y in der Bedeutung als C₁-C₈-Alkyl um C₁-C₄-Alkyl. Die oben für Y genannten Alkylreste können unsubstituiert oder durch Hydroxy oder C₁-C₄-Alkoxy, insbesondere durch Hydroxy, substituiert sein.

Als C₂-C₄-Alkanoyl kommen für Y z.B. Propionyl oder insbesondere Acetyl in Betracht. Der Rest Y kann in der Bedeutung als C₂-C₄-Alkanoyl durch Hydroxy oder insbesondere C₁-C₄-Alkoxy, wie z.B. Aethoxy oder vorzugsweise Methoxy, weitersubstituiert sein. Als substituierter Rest ist Methoxyacetyl bevorzugt.

Als C₁-C₄-Alkoxycarbonyl kommen für Y z.B. Methoxy- oder insbesondere Aethoxycarbonyl in Betracht. Der Rest Y kann in der Bedeutung als C₁-C₄-Alkoxycarbonyl durch Hydroxy oder C₁-C₄-Alkoxy, wie z.B. Methoxy oder Aethoxy, weitersubstituiert sein. Bevorzugt sind hierbei die entsprechenden unsubstituierten Reste.

Als C₁-C₄-Alkylsulfonyl kommen für Y z.B. Methyl- oder Aethylsulfonyl in Betracht.

Als Phenylsulfonyl kommen für Y neben dem entsprechenden unsubstituierten Rest die durch C₁-C₄-Alkyl, wie Methyl, Äthyl, Propyl, Isopropyl, Butyl, sek.-Butyl, tert.-Butyl oder Isobutyl, C₁-C₄-Alkoxy, wie z.B. Methoxy, Äthoxy, Propoxy, lsopropoxy, Butoxy oder lsobutoxy, oder durch Halogen, wie z.B. Fluor, Brom oder insbesondere Chlor, substituierten Reste in Betracht. Bevorzugt sind hierbei die unsubstituierten oder insbesondere die durch C₁-C₄-Alkyl, vorzugsweise durch Methyl, substituierten Reste.

Der Rest X enthält als C₁-C₄-Alkylreste z.B. Methyl, Äthyl, Propyl, Isopropyl, Butyl, sek.-Butyl, tert.-Butyl oder Isobutyl, insbesondere Methyl oder Aethyl und vorzugsweise Methyl. Als C₁-C₄-Alkylenreste enthält der Rest X insbesondere Methylen oder Aethylen und vorzugsweise Methylen. Bevorzugt ist X ein Rest der Formel -C₁-C₂-Alkylen-O-C₁-C₂-Alkyl, insbesondere ein Rest der Formel -CH₂-O-CH₃.

R₁, R₂ und R₃ sind bevorzugt unabhängig voneinander Wasserstoff oder C₁-C₄-Alkyl, insbesondere Wasserstoff.

R₄ und R₅ sind bevorzugt unabhängig voneinander Wasserstoff oder C₁-C₄-Alkyl, insbesondere Wasserstoff oder Methyl und vorzugsweise Wasserstoff.

R₆ ist bevorzugt Wasserstoff.

Y ist bevorzugt Wasserstoff; gegebenenfalls durch Hydroxy oder C₁-C₄-Alkoxy substituiertes C₁-C₈-Alkyl, C₂-C₄-Alkanoyl oder C₁-C₄-Alkoxycarbonyl; oder ein Rest der Formel -CH₂-CH=CH₂.

Besonders bevorzugt ist Y gegebenenfalls durch Hydroxy oder C₁-C₄-Alkoxy substituiertes C₁-C₈-Alkyl, C₂-C₄-Alkanoyl oder C₁-C₄-Alkoxycarbonyl; oder ein Rest der Formel -CH₂-CH=CH₂.

Ganz besonders bevorzugt ist Y gegebenenfalls durch Hydroxy substituiertes C₁-C₈-Alkyl oder ein Rest der Formel -CH₂-CH=CH₂, Insbesondere bedeutet Y C₁-C₄-Alkyl, vorzugsweise Methyl.

Bevorzugt sind Azofarbstoffe der Formel (1), worin R₁, R₂, R₃ und R₆ Wasserstoff und R₄ und R₅ unabhängig voneinander Wasserstoff oder C₁-C₄-Alkyl, insbesondere Wasserstoff, bedeuten. Hierbei gelten für X und Y die oben angegebenen Bedeutungen und Bevorzugungen.

Besonders bevorzugt sind Azofarbstoffe der Formel (1), worin R₁, R₂, R₃, R₄, R₅ und R₆ Wasserstoff sind und X ein Rest der Formel -C₁-C₂-Alkylen-O-C₁-C₂-Alkyl, insbesondere ein Rest der Formel -CH₂-O-CH₃ ist. Hierbei gelten für Y die oben angegebenen Bedeutungen und Bevorzugungen.

Ganz besonders bevorzugt sind Azofarbstoffe der Formel (1), worin R₁, R₂, R₃, R₄, R₅ und R₆ Wasserstoff sind, X ein Rest der Formel -CH₂-O-CH₃ und Y C₁-C₄-Alkyl, insbesondere Methyl, ist.

Die Sulfogruppe in den Azofarbstoffen der Formel (1) ist bevorzugt in meta-Stellung, relativ zur Azogruppe, gebunden.

Der Rest der Formel -O-Y in den Azofarbstoffen der Formel (1) ist bevorzugt in para-Stellung, relativ zur Azogruppe, gebunden.

Gegenstand der vorliegenden Erfindung ist ferner ein Verfahren zur Herstellung von Azofarbstoffen der Formel (1), welches dadurch gekennzeichnet ist, dass man ein Amin der Formel 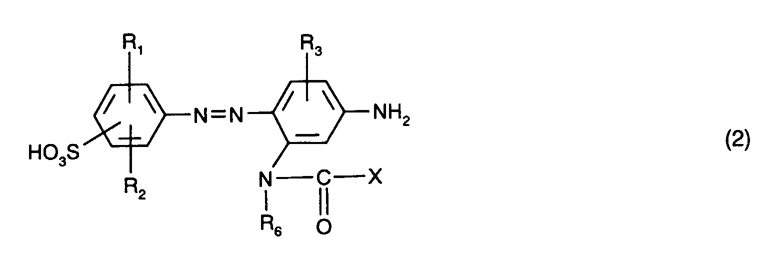 diazotiert, auf eine Kupplungskomponente der Formel 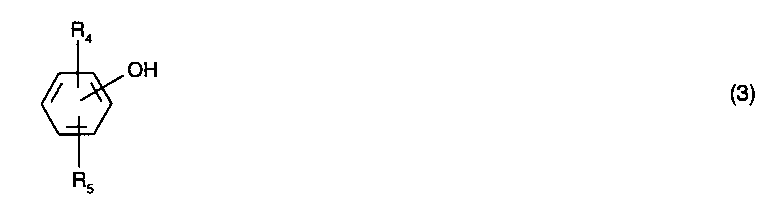 kuppelt und gegebenenfalls das erhaltene Reaktionsprodukt mit einer den Rest Y einführenden Verbindung umsetzt, wobei R₁, R₂, R₃, R₄, R₅, R₆, X und Y die unter Formel (1) angegebenen Bedeutungen haben.

Die Diazotierung der Verbindung der Formel (2) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C.

Die Kupplung auf die Kupplungskomponente der Formel (3) erfolgt in an sich bekannter Weise, bei sauren, neutralen bis schwach alkalischen pH-Werten, z.B. einem pH-Wert von 5 bis 10, und Temperaturen von beispielsweise -5 bis 40°C, vorzugsweise 0 bis 30°C.

Zur Einführung des Restes Y können beispielsweise Verbindungen der Formel

Hal-Y (4),

worin Hal Halogen, wie Chlor oder Brom, insbesondere Chlor, bedeutet, verwendet werden. Als Beispiele für Verbindungen der Formel (4) seien Acetylchlorid, Propionylchlorid, Methoxyacetylchlorid, Chlorameisensäure-äthylester, lsopropylchlorid, Allylchlorid, p-Toluol-sulfonsäurechlorid, Methylsulfonylchlorid sowie Aethylsulfonylchlorid genannt.

Die Einführung des Restes Y kann z.B. in dipolaren aprotischen Lösungsmitteln, wie z.B. Dimethylformamid oder Dimethylsulfoxid, oder in Wasser oder vorzugsweise in Pyridin erfolgen, bei einer Temperatur von beispielsweise 10 bis 80°C, insbesondere 10 bis 50°C.

Handelt es sich bei der Einführung des Restes Y um eine Verätherung, so kann diese auch mit dem entsprechenden Dialkylsulfat oder Alkylenoxid erfolgen. Diese Reaktion erfolgt vorzugsweise in wässrigem Medium, bei einem pH-Wert von beispielsweise 9 bis 12 und einer Temperatur von z.B. 40 bis 80°C. Als Beispiele für entsprechende Dialkylsulfate seien Dimethylsulfat und Diäthylsulfat genannt. Als Beispiele für entsprechende Alkylenoxide seien n-Butylen-1,2-oxid, Propylenoxid sowie Aethylenoxid genannt.

Verbindungen der Formel (2) können z.B. erhalten werden, indem man ein Amin der Formel 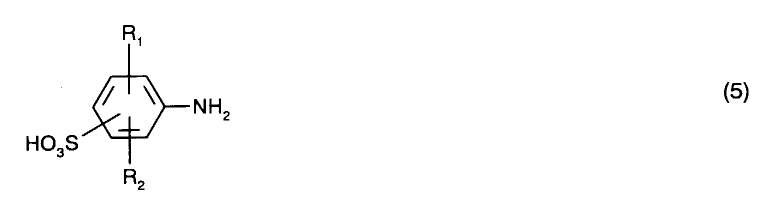 diazotiert und auf eine Kupplungskomponente der Formel 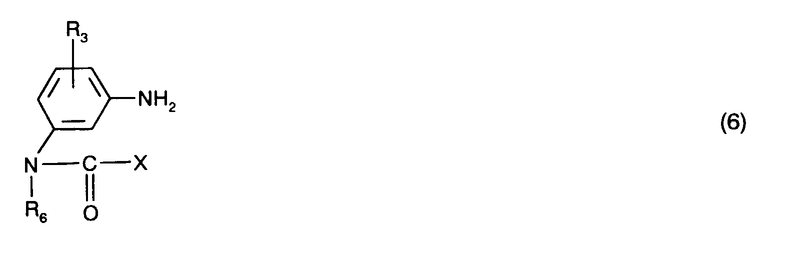 kuppelt. Die Diazotierung des Amins der Formel (5) und die Kupplung auf die Verbindung der Formel (6) kann gemäss hierzu üblichen Verfahren, wie z.B. den oben angegebenen, erfolgen.

Kupplungskomponenten der Formel (6) können z.B. durch Hydrierung von Verbindungen der Formel 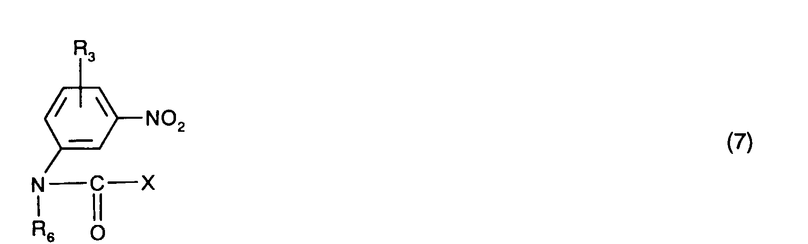 erhalten werden. Die Hydrierung kann gemäss hierfür üblichen Verfahren erfolgen, wie z.B. in Methanol in Gegenwart eines Palladium/Kohlenstoff-Katalysators.

In dem erfindungsgemässen Verfahren zur Herstellung der Azofarbstoffe der Formel (1) gelten für die Substituenten der zur Herstellung verwendeten Verbindungen die oben angegebenen Bedeutungen und Bevorzugungen.

Die Verbindungen der Formeln (2), (3), (4), (5), (6) und (7) sind bekannt oder können in Analogie zu bekannten Verbindungen hergestellt werden.

Die Azofarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Ferner sind die erfindungsgemässen Farbstoffe gut wasserlöslich und gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

140 Teile 3-Nitroanilin werden in 590 Teilen Pyridin gelöst und es werden innerhalb von 60 Minuten bei einer Temperatur von 0 bis 5°C 132 Teile Methoxyessigsäurechlorid zugetropft. Man lässt 2 Stunden bei einer Temperatur von 5°C ausreagieren und gibt die Reaktionsmischung anschliessend zu 4000 Teilen Wasser. Die Suspension wird 20 Minuten gerührt, abfiltriert und mit 2500 Teilen Wasser und 180 Teilen Alkohol gewaschen. Nach dem Trocknen erhält man 199 Teile einer Verbindung der Formel

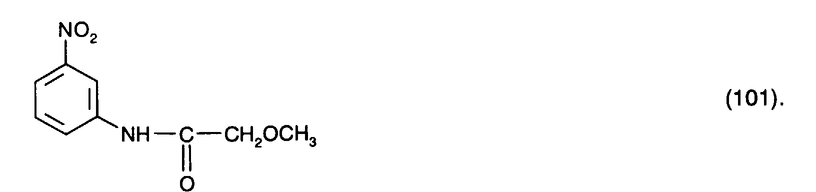

126,2 Teile der Verbindung der Formel (101) werden in 3000 Teilen Methanol gelöst und mittels eines Palladium/Kohlenstoff-Katalysators (10 Gew.-% Palladium) katalytisch hydriert. Nach dem Eindampfen erhält man 105 Teile der Verbindung der Formel

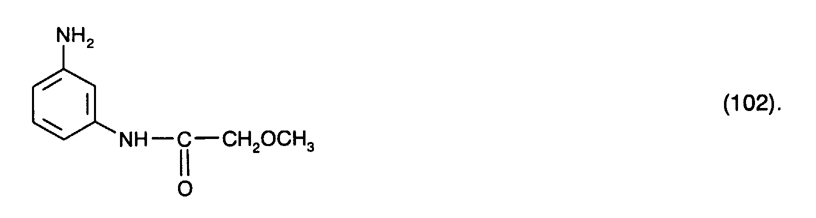

Es werden 34,9 Teile 1-Aminobenzol-3-sulfonsäure in 200 Teilen Wasser verrührt und mit 21,2 Teilen Natriumcarbonat versetzt. Anschliessend werden 54 Teile einer 4-normalen wässrigen Natriumnitritlösung zugegeben, die Reaktionsmischung wird auf eine Temperatur von 5°C abgekühlt und innerhalb von 35 Minuten auf 200 Teile Eis und 64 Teile konzentrierter Salzsäure getropft. Die so erhaltene Diazolösung wird 30 Minuten gerührt und anschliessend innerhalb von 45 Minuten bei einer Temperatur von 0 bis 5°C auf eine Kupplungslösung getropft, welche 36,1 Teile der Verbindung der Formel (102) in 200 Teilen Wasser und 240 Teile Eis enthält. Während der Kupplung wird der pH durch Zugabe 10%-iger wässriger Natriumcarbonatlösung bei einem Wert von 6,5 gehalten. Nach 10 Minuten Rühren kann keine Diazokomponente mehr festgestellt werden. Es werden 50,8 Teile einer 4-normalen wässrigen Natriumnitritlösung zugegeben und die Lösung wird innerhalb von 55 Minuten auf 200 Teile Eis und 56 Teile konzentrierter Salzsäure getropft. Man lässt eine Stunde bei einer Temperatur von 0 bis 5°C ausdiazotieren und gibt die Diazosuspension anschliessend innerhalb von 30 Minuten bei einer Temperatur von 25°C zu einer Lösung von 19,8 Teilen Phenol in 400 Teilen Wasser und 19,6 Teilen einer konzentrierten wässrigen Natriumhydroxidlösung. Es stellt sich ein pH-Wert von 1,5 ein, welcher nach 10 Minuten Rühren mit 30 Teilen konzentrierter wässriger Natriumhydroxidlösung auf einen Wert von 9 gestellt wird. Die braune Suspension wird mit 300 Teilen Natriumchlorid versetzt und über Nacht gerührt. Anschliessend wird die Suspension abfiltriert und mit 25%-iger wässriger Natriumchloridlösung und 10%-iger wässriger Natriumchloridlösung gewaschen. Der feuchte Rückstand wird direkt aus 700 Teilen eines Gemisches von Aethylenglykolmonomethyläther und Wasser im Verhältnis 1:1 umkristallisiert. Nach dem Trocknen erhält man 62 Teile eines Farbstoffes, welcher in Form der freien Säure der Verbindung der Formel 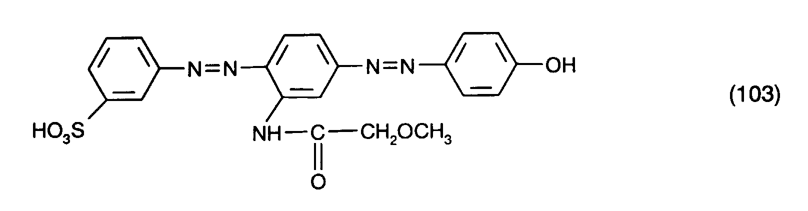 entspricht. Der Farbstoff der Formel (103) färbt Wolle und synthetisches Polyamid in gelben Farbtönen.

### Beispiele 2 bis 8:

In analoger Weise zu den Angaben in Beispiel 1 können Farbstoffe erhalten werden, welche in Form der freien Säure den Verbindungen der Formeln 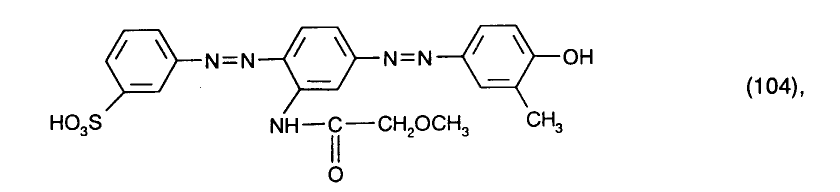 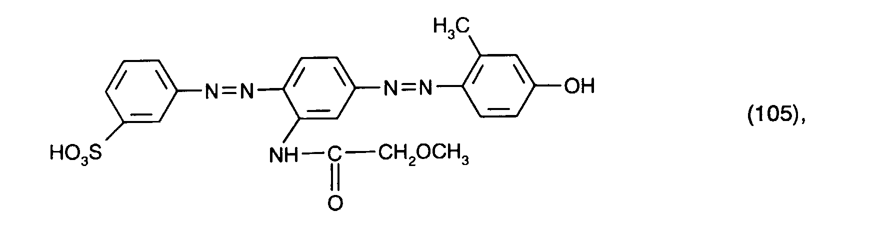 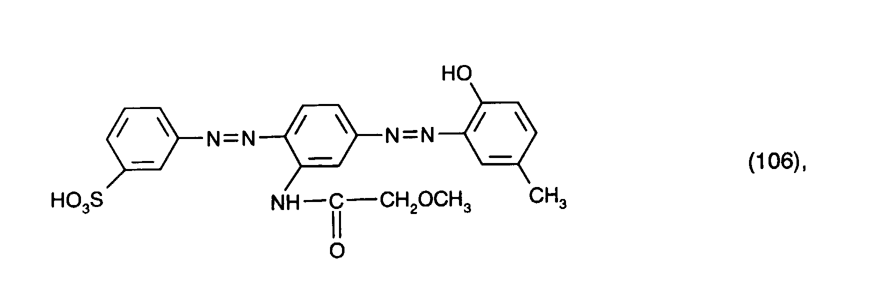 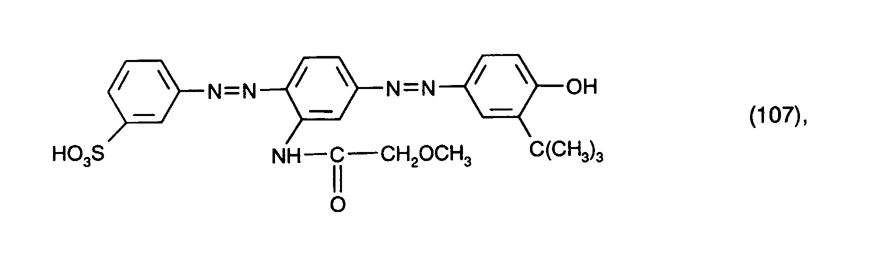 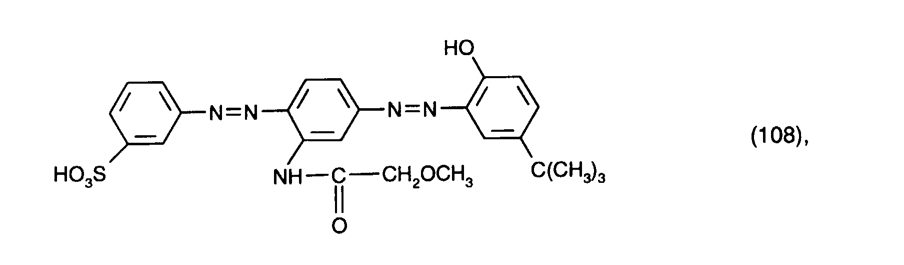 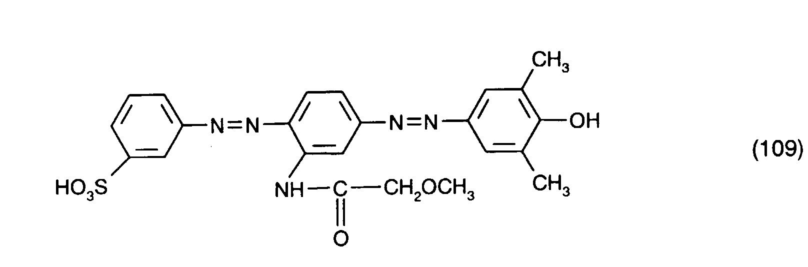 und 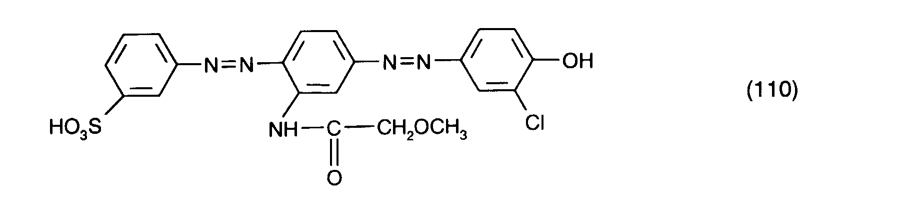 entsprechen. Die Farbstoffe der Formeln (104) bis (110) färben Wolle und synthetisches Polyamid in gelben Farbtönen.

### Beispiel 9:

9,4 Teile der Verbindung der Formel (103) werden in 80 Teilen Pyridin verrührt und es werden bei Raumtemperatur innerhalb von 10 Minuten 6,3 Teile Acetylchlorid zugetropft. Die Reaktionsmischung wird 3 Stunden bei einer Temperatur von 30°C gehalten und anschliessend zu 300 Teilen einer 15%-igen wässrigen Natriumchloridlösung gegeben und mit 100 Teilen Methanol versetzt. Die Suspension wird 30 Minuten gerührt, abfiltriert und mit Wasser und Methanol gewaschen. Nach dem Trocknen erhält man 9,4 Teile eines Farbstoffes, welcher in Form der freien Säure der Verbindung der Formel 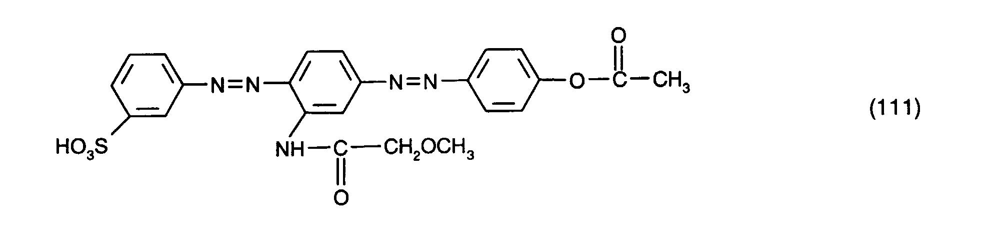 entspricht. Der Farbstoff der Formel (111) färbt Wolle und synthetisches Polyamid in gelben Farbtönen.

### Beispiele 10 und 11:

Verfährt man wie in Beispiel 9 angegeben, verwendet jedoch anstelle von 6,3 Teilen Acetylchlorid eine äquimolare Menge Methoxyacetylchlorid oder Methylsulfonylchlorid, so erhält man die in Form der freien Säure angegebenen Farbstoffe der Formeln 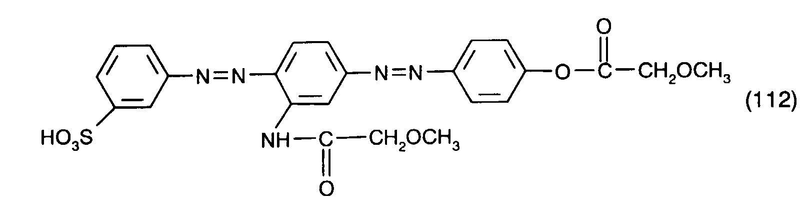 und

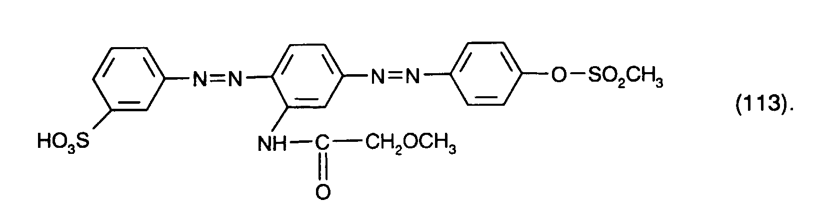

Die Farbstoffe der Formeln (112) und (113) färben Wolle und synthetisches Polyamid in gelben Farbtönen.

### Beispiel 12:

7 Teile der Verbindung der Formel (103) werden in 150 Teilen Wasser verrührt und mit 3,1 Teilen Triäthylamin versetzt. Zur erhaltenen Lösung werden innerhalb von 2 Minuten 6 Teile p-Toluol-sulfonsäurechlorid gegeben. Nach 20 Minuten wird die Reaktionsmischung mit 60 Teilen Wasser verdünnt, eine Stunde gerührt, mit 30 Teilen einer wässrigen konzentrierten Kaliumchloridlösung und 50 Teilen Methanol versetzt und weitere 20 Minuten gerührt. Anschliessend wird abfiltriert und der feuchte Rückstand direkt aus 30 Teilen Wasser und 80 Teilen Alkohol umkristallisiert. Nach dem Trocknen erhält man 8,4 Teile eines Farbstoffes, welcher in Form der freien Säure der Verbindung der Formel 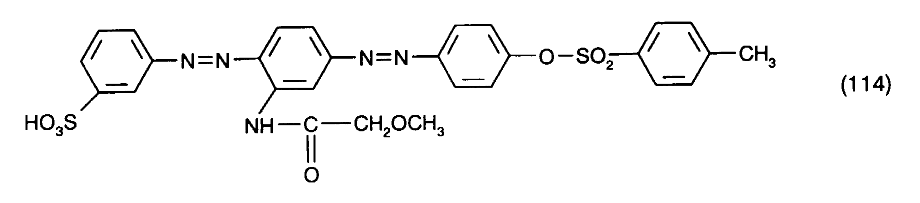 entspricht. Der Farbstoff der Formel (114) färbt Wolle und synthetisches Polyamid in gelben Farbtönen.

### Beispiele 13 bis 18:

Verfährt man wie in Beispiel 12 angegeben, verwendet jedoch anstelle von 6 Teilen p-Toluol-sulfonsäurechlorid eine äquimolare Menge Chlorameisensäureäthylester, Aethylsulfonylchlorid, Dimethylsulfat, Diäthylsulfat, lsopropylchlorid oder Allylchlorid, so erhält man die in Form der freien Säure angegebenen Farbstoffe der Formeln 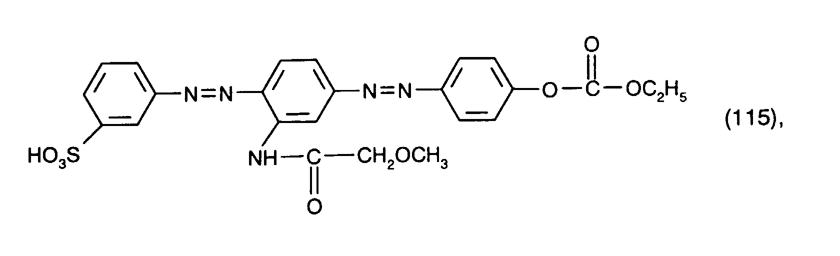 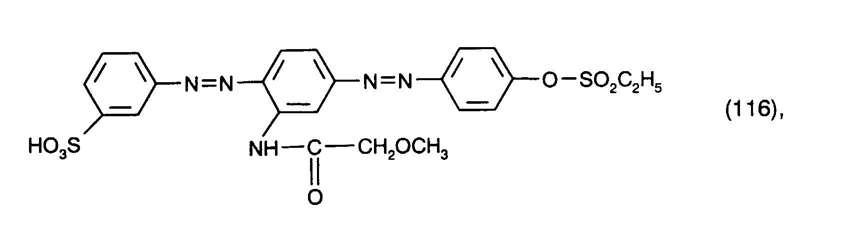 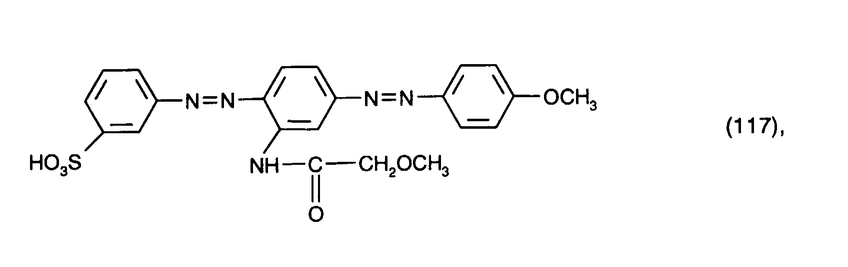 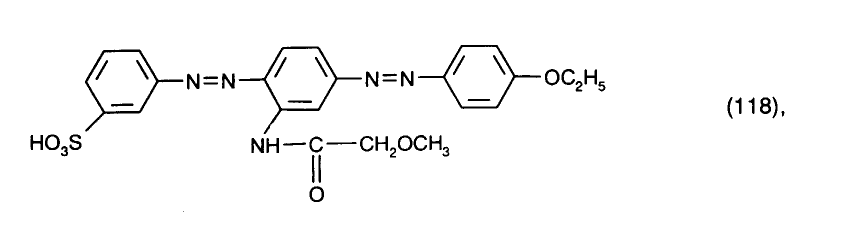 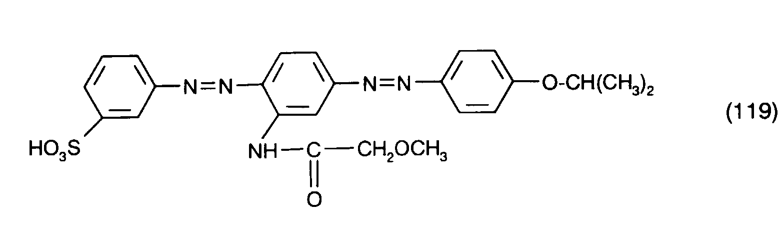 und

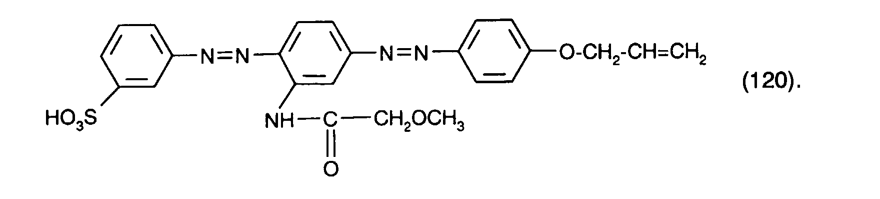

Die Farbstoffe der Formeln (115) bis (120) färben Wolle und synthetisches Polyamid in gelben Farbtönen.

### Beispiel 19:

23,5 Teile der Verbindung der Formel (103) werden in 250 Teilen Wasser bei einer Temperatur von 60°C und einem pH-Wert von 11 gelöst. Bei dieser Temperatur werden 15 Teile n-Butylen-1,2-oxid zugegeben und man lässt die Reaktionsmischung anschliessend bei einer Temperatur von ca. 65°C und einem pH-Wert von 10,5 während 24 Stunden ausreagieren. Danach wird mit 15 Teilen Natriumchlorid ausgesalzen und abfiltriert. Nach dem Trocknen erhält man 22 Teile eines Farbstoffes, welcher in Form der freien Säure der Verbindung der Formel 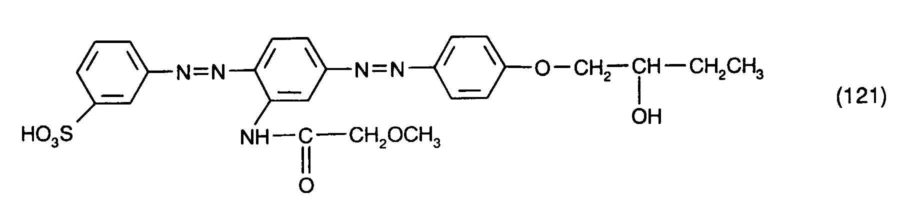 entspricht. Der Farbstoff der Formel (121) färbt Wolle und synthetisches Polyamid in gelben Farbtönen.

### Beispiele 20 und 21:

Verfährt man wie in Beispiel 19 angegeben, verwendet jedoch anstelle von 15 Teilen n-Butylen-1,2-oxid eine äquimolare Menge Propylenoxid oder Aethylenoxid, so erhält man die in Form der freien Säure angegebenen Farbstoffe der Formeln 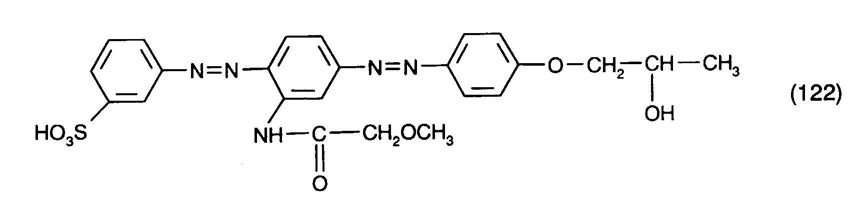 und

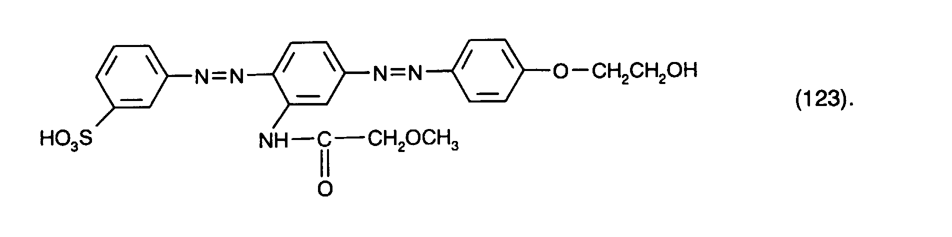

Die Farbstoffe der Formeln (122) und (123) färben Wolle und synthetisches Polyamid in gelben Farbtönen.

### Färbebeispiel:

Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Aethylenoxid) gegeben. Anschliessend wird das Bad mit Essigsäure auf einen pH-Wert von 6 gestellt. Dann gibt man 0,4 Teile des Farbstoffs der Formel (117) zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem gelben Farbton gefärbtes Gewebe.

## Patentansprüche

1. Azofarbstoffe der Formel 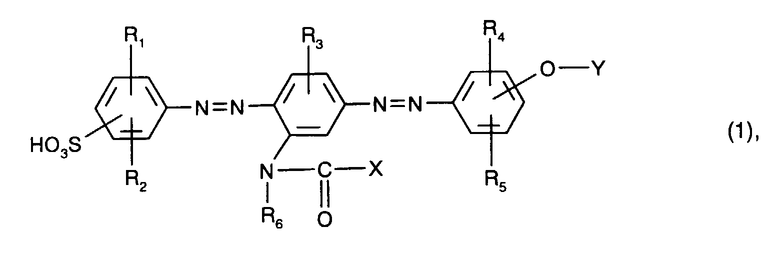 worin
R₁, R₂, R₃, R₄ und R₅ unabhängig voneinander Wasserstoff, C₁-C₄-Alkyl, C₁-C₄-Alkoxy oder Halogen sind,
R₆ Wasserstoff oder C₁-C₄-Alkyl,
X -C₁-C₄-Alkylen-O-C₁-C₄-Alkyl und
Y Wasserstoff; gegebenenfalls durch Hydroxy oder C₁-C₄-Alkoxy substituiertes C₁-C₈-Alkyl, C₂-C₄-Alkanoyl oder C₁-C₄-Alkoxycarbonyl; ein Rest der Formel -CH₂-CH=CH₂; C₁-C₄-Alkylsulfonyl; oder gegebenenfalls durch C₁-C₄-Alkyl, C₁-C₄-Alkoxy oder Halogen substituiertes Phenylsulfonyl ist.

2. Azofarbstoffe gemäss Anspruch 1, dadurch gekennzeichnet, dass
R₁, R₂ und R₃ Wasserstoff sind.

3. Azofarbstoffe gemäss einem der Ansprüche 1 und 2, dadurch gekennzeichnet, dass
R₄ und R₅ unabhängig voneinander Wasserstoff oder C₁-C₄-Alkyl, insbesondere Wasserstoff, sind.

4. Azofarbstoffe gemäss einem der Ansprüche 1 bis 3, dadurch gekennzeichnet, dass
R₆ Wasserstoff ist.

5. Azofarbstoffe gemäss einem der Ansprüche 1 bis 4, dadurch gekennzeichnet, dass
X ein Rest der Formel -C₁-C₂-Alkylen-O-C₁-C₂-Alkyl ist.

6. Azofarbstoffe gemäss einem der Ansprüche 1 bis 5, dadurch gekennzeichnet, dass
X ein Rest der Formel -CH₂-O-CH₃ ist.

7. Azofarbstoffe gemäss einem der Ansprüche 1 bis 6, dadurch gekennzeichnet, dass
Y gegebenenfalls durch Hydroxy oder C₁-C₄-Alkoxy substituiertes C₁-C₈-Alkyl, C₂-C₄-Alkanoyl oder C₁-C₄-Alkoxycarbonyl; oder ein Rest der Formel -CH₂-CH=CH₂ ist.

8. Azofarbstoffe gemäss einem der Ansprüche 1 bis 7, dadurch gekennzeichnet, dass
Y gegebenenfalls durch Hydroxy substituiertes C₁-C₈-Alkyl oder ein Rest der Formel -CH₂-CH=CH₂ ist.

9. Azofarbstoffe gemäss einem der Ansprüche 1 bis 8, dadurch gekennzeichnet, dass
Y C₁-C₄-Alkyl, insbesondere Methyl, ist.

10. Azofarbstoffe gemäss einem der Ansprüche 1 bis 9, dadurch gekennzeichnet, dass
R₁, R₂, R₃, R₄, R₅ und R₆ Wasserstoff sind, X ein Rest der Formel -CH₂-O-CH₃ und Y C₁-C₄-Alkyl, insbesondere Methyl, ist.

11. Azofarbstoffe gemäss einem der Ansprüche 1 bis 10, dadurch gekennzeichnet, dass
die Sulfogruppe in den Azofarbstoffen der Formel (1) in meta-Stellung, relativ zur Azogruppe, gebunden ist.

12. Verfahren zur Herstellung von Azofarbstoffen gemäss Anspruch 1, dadurch gekennzeichnet, dass man ein Amin der Formel 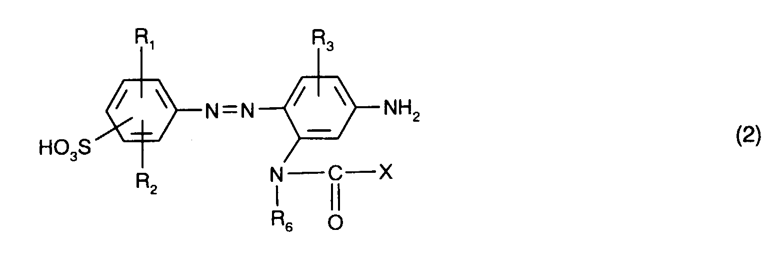 diazotiert, auf eine Kupplungskomponente der Formel 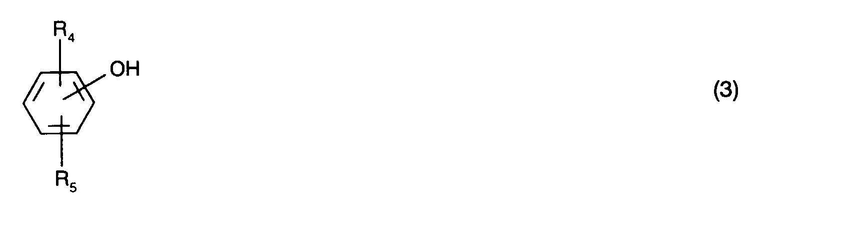 kuppelt und gegebenenfalls das erhaltene Reaktionsprodukt mit einer den Rest Y einführenden Verbindung umsetzt, wobei R₁, R₂, R₃, R₄, R₅, R₆, X und Y die in Anspruch 1 angegebenen Bedeutungen haben.

13. Verwendung der Azofarbstoffe gemäss den Ansprüchen 1 bis 11 bzw. der gemäss Anspruch 12 erhaltenen Azofarbstoffe zum Färben oder Bedrucken von stickstoffhaltigen oder hydroxygruppenhaltigen Fasermaterialien.

14. Verwendung gemäss Anspruch 13 zum Färben oder Bedrucken von natürlichen oder synthetischen Polyamidfasermaterialien.
